(19) **Europäisches Patentamt / European Patent Office / Office européen des brevets**

(11) **EP 1 801 682 B1**

(12) **EUROPEAN PATENT SPECIFICATION**

(45) Date of publication and mention
of the grant of the patent:
**08.08.2012 Bulletin 2012/32**

(51) Int Cl.:
***G05B 23/02*** (2006.01)

(21) Application number: **06026436.3**

(22) Date of filing: **20.12.2006**

(54) **Information analysis system for water distribution and pipelines**

Informationsanalyse für Wasserverteilungsysteme und Rohrleitungen

Système d'analyse des informations pour systèmes de distribution d'eau et conduites d'eau

(84) Designated Contracting States:
**DE FR GB NL**

(30) Priority: **21.12.2005 JP 2005368195**

(43) Date of publication of application:
**27.06.2007 Bulletin 2007/26**

(73) Proprietor: **Kabushiki Kaisha Toshiba**
**Tokyo 105-8001 (JP)**

(72) Inventor: **Yukawa, Atsushi**
**Minato-ku**
**Tokyo 105-8001 (JP)**

(74) Representative: **HOFFMANN EITLE**
**Patent- und Rechtsanwälte**
**Arabellastrasse 4**
**81925 München (DE)**

(56) References cited:
- AL-WESHAH R A ET AL: "Reliability of integrated municipal water systems during drought: Reliability bounds approach" UNCERTAINTY MODELING AND ANALYSIS, 1993. PROCEEDINGS., SECOND INTERNATIONAL SYMPOSIUM ON COLLEGE PARK, MD, USA 25-28 APRIL 1993, LOS ALAMITOS, CA, USA,IEEE COMPUTERS SOC, 25 April 1993 (1993-04-25), pages 371-378, XP010125664 ISBN: 0-8186-3850-8
- SETIADI ET AL: "Modelling errors, entropy and the hydraulic reliability of water distribution systems" ADVANCES IN ENGINEERING SOFTWARE, ELSEVIER SCIENCE, OXFORD, GB, vol. 36, no. 11-12, November 2005 (2005-11), pages 780-788, XP005161005 ISSN: 0965-9978

**Description**

The invention relates to an information analysis system for water distribution and pipelines which analyzes the information on the water distribution and pipelines, taking in the data about the inflow of clean water flowing from one water distribution pond into a water distribution pipeline network and the data about the pressure of one position properly selected in the water distribution pipeline network.

In Japan, generally after raw water taken from a river is purified at a filtration plant to obtain clean water which is pushed into a water distribution pond by a pump and then sent forth and distributed from this pond to a water distribution pipeline network under a natural flow. When water is distributed from the water distribution pond to the water distribution pipeline network, it is difficult to keep the water pressure in the water distribution pipeline network properly if the water distribution area is in a rough terrain.

In these days, there are some places in which the water distribution pipeline network is divided into several blocks and managed or a pressure reducing valve is used in order to diminish a change of water pressure according to the terrain roughness. This enables the water pressure to be kept moderately, thereby reducing water leak from the water distribution pipeline network and saving the clean water, which will help raise the profits in a water supply business.

In a conventional water supply monitoring system, flow meters and pressure indicators are set up at required positions of pipelines in the water distribution pipeline network in order to measure the flow rate and pressure of the pipelines, and a condition of the water distribution pipeline network is monitored according to these measured values. In this case, these measured data is used for creating a feedback signal of pressure control and flow rate control, detecting an abnormal value by setting the upper/lower limits in the flow rate, and creating daily and monthly reports as the basic information.

In the conventional water supply monitoring system, only the data is collected according to the time but the measured data collected is not analyzed nor used in order to maintain and manage the water distribution pipeline network.

Therefore, it is difficult to grasp a condition of a water distribution pipeline network which changes on the second time scale and the water leak caused by the aged deterioration of the water distribution pipeline network.

In addition, as a method for grasping the condition of the water distribution pipeline network, a pipeline network analysis is performed generally, but it has to previously set necessary data including the information of a water distribution pipeline, the altitude where the pipeline is set, and the flow rate data for every point, thereby analyzing the pipeline network by simulation. Therefore, it takes a long time and much labor.

D1:SETIADI ET AL: "Modelling errors, entropy and the hydraulic reliability of water distribution systems" ADVANCES IN ENGINEERING SOFTWARE, ELSEVIER SCIENCE, OXFORD, GB, vol. 36, no. 11-12, November 2005 (2005-11), pages 780-788, XP005161005 ISSN: 0965-9978 describes an information analysis system for water distribution.

The present invention is made taking the above situation into consideration and the object of the invention is to supply an information analysis system for water distribution and pipelines which can always keep pressure properly in a water distribution pipeline network and adequately recognize the condition of the water distribution pipeline network which changes on the second time scale.

In order to achieve the above-mentioned object, the invention provides a water distribution/pipeline information analysis system comprised of the following configuration.

An information analysis system for water distribution and pipelines according to a first aspect of the present invention comprises: data collecting means for taking in, at predetermined intervals, flow rate data and pressure data respectively transmitted from one flow meter which measures flow rate of clean water flowing from a water distribution pond to a water distribution pipeline network and one pressure indicator which measures pressure of one pipeline at a proper position within the water distribution pipeline network; approximate expression calculating means for taking in the flow rate data and the pressure data for one day collected by the data collecting means sequentially, to calculate the data based on the Hazen William's approximate expression shown below, and for obtaining a virtual pipeline total length and a flow rate correction coefficient per day as parameters by a least-square method, to store the above into a pipeline condition grasping database,

$$H_{loss} = 10.67 \times L \times Q^{1.85} \times \alpha / (C^{1.85} \times D^{4.87})$$

where, $H_{loss}$: water head loss
L: virtual pipeline total length (m)
Q: indicated value of the flow meter
C: flow velocity coefficient
D: diameter of a pipe (mm)

$\alpha$ : flow rate correction coefficient of a water distribution block; and on-line defect detecting means for taking in the flow rate data and the pressure data collected by the data collecting means at the predetermined intervals, calculating a pressure value based on the Hazen William's approximate expression with the parameters stored in the pipeline condition grasping database, and detecting an abnormal value when a water head difference between the pressure value and actually measured pressure value is deviated from a predetermined value and more.

An information analysis system for water distribution and pipelines according to a second aspect of the present invention comprises: data collecting means for taking in, at predetermined intervals, flow rate data and pressure data respectively transmitted from one flow meter which measures flow rate of clean water flowing from a water distribution pond to a water distribution pipeline network and one pressure indicator which measures pressure of one pipeline at a proper position within the water distribution pipeline network; approximate expression calculating means for taking in the flow rate data and the pressure data for one day collected by the data collecting means sequentially, to calculate the data based on the Hazen William's approximate expression shown below, and for obtaining a virtual pipeline total length and a flow rate correction coefficient per day as parameters by a least-square method so as to store the parameters into a pipeline condition grasping database,

$$H_{loss} = 10.67 \times L \times Q^{1.85} \times \alpha / (C^{1.85} \times D^{4.87})$$

where, $H_{loss}$: water head loss
L: virtual pipeline total length (m)
Q: indicated value of the flow meter
C: flow velocity coefficient
D: diameter of a pipe (mm)
$\alpha$ : flow rate correction coefficient of a water distribution block; and pipeline condition analyzing means for recognizing a pipeline condition while monitoring the values of the parameters per day stored in the pipeline condition grasping database, the means having a learning function of labeling portfolios of the parameters as a learning item and classifying the pipeline network into patterns.

The information analysis system for water distribution and pipelines according to a third aspect of the present invention, in one of the systems of the first and second aspects, further comprises: daily time lag compensating means, having a memory for taking in the flow rate data and the pressure data collected by the data collecting means and storing the data for one day, for selecting a time lag presenting a highest correlation between the flow rate data and the pressure data for one day stored in the memory, to compensate and supply the flow rate data and the related pressure data for the one day to the approximate expression calculating means sequentially.

According to the system of the invention, it is possible to always keep pressure properly in the water distribution pipeline network and adequately recognize the condition of the water distribution pipeline network which changes on the second time scale.

The invention can be more fully understood from the following detailed description when taken in conjunction with the accompanying drawings, in which:

FIG. 1 is a conceptual diagram showing a process to which the information analysis system for water distribution and pipelines according to the invention is applied;
FIG. 2 is a block diagram showing a first embodiment of the information analysis system for water distribution and pipelines according to the invention;
FIG. 3A is a graph showing a conventional case in which a correlation between a daily average water supply and the number of water supply business units throughout the country is not normally distributed;
FIG. 3B is a graph showing a case of the invention in which the correlation is normally distributed;
FIG. 4 is a view numerically showing a concrete example of the inner structure of the water distribution blocks to be analyzed;
FIG. 5 is a view showing the result of analysis by the water distribution information analysis system for analyzing the water distribution blocks shown in FIG. 4, according to the first embodiment;
FIG. 6 is a block diagram showing a second embodiment of the information analysis system for water distribution and pipelines according to the invention;
FIG. 7 is a schematic view for use in explaining flow rate loss when the pipeline network is expressed as one pipeline;
FIG. 8 is a graph showing the correlation between the inflow and the water head in one period of time, which has been found by on-line defect detector, in a magnified way, according to the second embodiment;
FIG. 9 is a correlation graph between a flow rate correction coefficient $\alpha$ and virtual pipeline total length L as one example of the result from the analysis by a pipeline condition analyzing unit, according to the second embodiment;

and

FIG. 10 is a correlation graph between the flow rate correction coefficient $\alpha$ and the virtual pipeline total length L obtained from the measurement data of the pressure and the flow rate in one period of time after a defect of the pressure reducing valve is resolved as an example as the result of analysis by the pipeline condition analyzing unit, according to the second embodiment.

Embodiments of the invention will be described referring to the drawings.

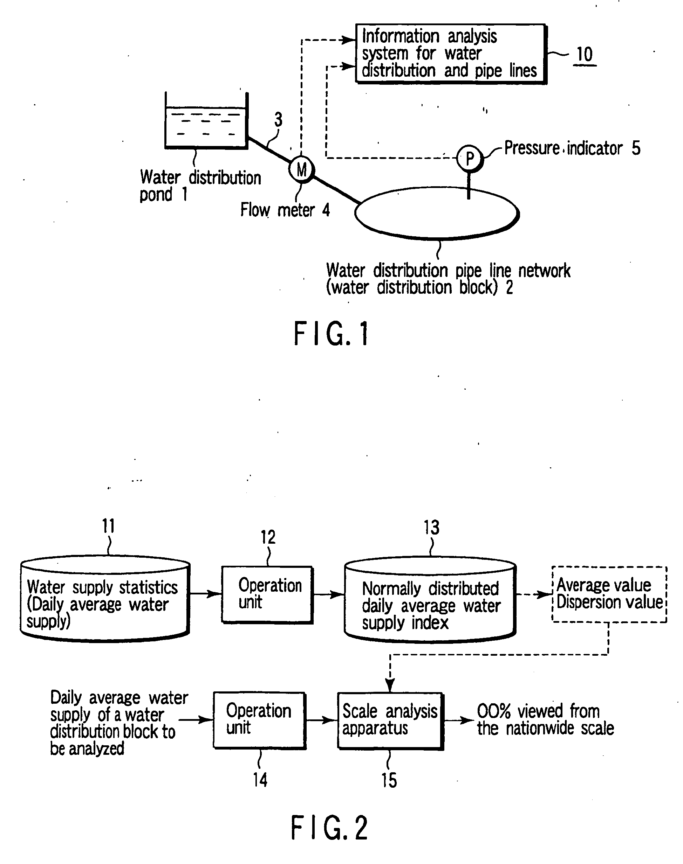

FIG. 1 is a schematic view showing a process to which an information analysis system for water distribution and pipelines according to the invention is applied.

As shown in FIG. 1, the system is for the process in which clean water is supplied from one water distribution pond 1 to a water distribution pipeline network (hereinafter, referred to as a water distribution block) 2. It is provided with a flow meter 4 for measuring the inflow of clean water in a clean water injection pipe 3 near the entrance of the water distribution block 2 and a pressure indicator 5 for measuring the water distribution pressure within the water distribution block 2 in an appropriate pipe within the water distribution block 2. The data measured by the flow meter 4 and the pressure indicator 5 is transmitted to an information analysis system 10 for water distribution and pipelines.

When the water distribution amount which is supplied from the water distribution pond 1 to the water distribution block 2 as mentioned above is monitored by one flow meter 4 and one pressure indicator 5, it is necessary to apply the contents of this object water supply business based on the daily average water supply with the nationwide water supply statistics to compare the characteristics of the water supply business.

The daily average water supply according to the nationwide water supply statistics ranges widely from 1,000 $m^3/d$ to 4500,000 $m^3/d$ and it is not normally distributed in a histogram with water supply divided by the regular water distribution amounts. Therefore, rank of the daily average water supply of the objective distribution block with respect to the nationwide water supply statistics can not be obtained without an area of normally-distributed water amount.

Therefore, according to the invention, the daily average water supply from the nationwide water supply statistics is converted by a normal distribution converting formula to obtain a normally distributed histogram in advance. By using an average value and a dispersion value obtained from this histogram, the daily average water supply obtained from the data about the above-mentioned distribution block which is collected by the flow meter 4 and the pressure indicator 5 at a predetermined cycle (for example, a cycle of 5 seconds) is analyzed, thereby making it possible to recognize the water supply scale with probability, without checking the water supply statistics by using the daily average water supply in another water supply block to be analyzed.

FIG. 2 is a block diagram showing a first embodiment of the information analysis system for water distribution and pipelines system according to the invention.

In FIG. 2, the reference numeral 11 denotes a database in which actual daily average water supply data of each water supply business unit according to the nationwide water supply statistics is stored. An operation unit 12 takes each daily average water supply data from the database 11 and converts the daily average water supply by the normal distribution converting formula shown in the following formula (1). A histogram of the daily average water supply of each water supply business unit according to the nationwide water supply statistics is normally distributed and stored into a disk 13 as a daily average water supply index (average value and dispersion value).

$$V = \log_{10} (Q/1000)^{(1/2.5)} \dots (1)$$

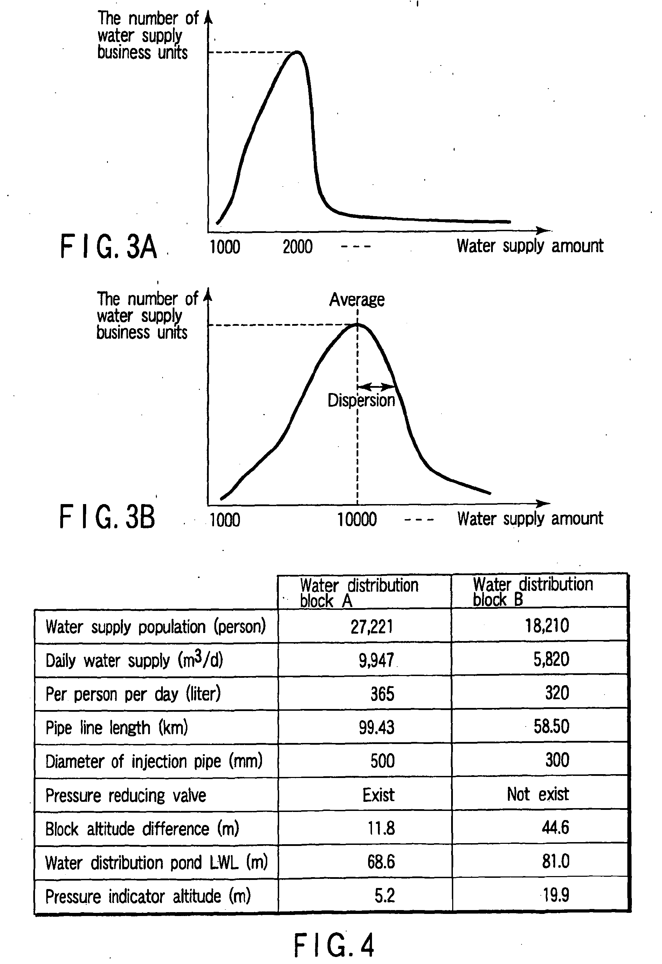

The daily average water supply distribution of each water supply business unit in the whole country stored in the database 11 is expressed in a graph, as shown in FIG. 3A, with the daily average water supply on an abscissa and the number of business units on an ordinate. As is apparent from FIG. 3A, even if a histogram of the daily average water supply for the regular water distribution amount is obtained, it is found that the histogram is not normally distributed.

On the other hand, the daily average water supply distribution of each water supply business unit in the whole country converted by the above-mentioned formula (1) is expressed in a graph as shown in FIG. 3B. As is apparent from FIG. 3B, the daily average water supply is normally distributed and the average value and the dispersion value can be obtained from the normally distributed daily average water supply index.

Next, an apparatus will be described, which finds how much percentage a water supply business unit having the water supply scale desired to be checked occupies in the whole country scale, according to the daily average water supply index in which each daily average water supply of the water system business units throughout the country is normally distributed.

As shown in FIG. 2, the daily average water supply data in the water distribution block to be analyzed is supplied to an operation unit 14 and the operation unit 14 converts the daily average water supply according to the above-mentioned formula (1) and supplies the resultant value to a scale analysis apparatus 15. The scale analysis apparatus 15 is provided with a normal distribution probability table, not illustrated, in which the daily average water supply index (average value and dispersion value) stored in the above-mentioned disk 13 is stored in advance, the scale analysis apparatus 15 calculates the percentage of the value converted in the operation unit 14 in the whole country scale based on the average value and the dispersion value stored in the normal distribution probability table and outputs the result.

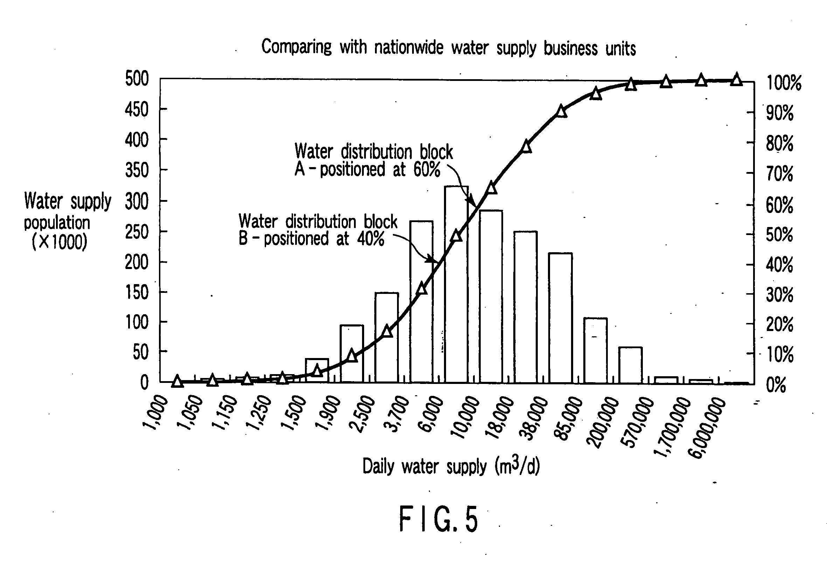

Here, the results from analyzing the water distribution blocks A and B having the scale as shown in FIG. 4, as a concrete water distribution block, by the above-mentioned water distribution information analysis system are shown in FIG. 5.

When each daily average water supply in the water distribution block A and the water distribution block B shown in FIG. 4 is analyzed by the above-mentioned water distribution information analysis system, each daily average water supply in the water distribution blocks A and B is normally distributed as shown in FIG. 5 and the daily average water supply obtained by dividing the water supply amount on the abscissa can be compared all over the whole water supply business units throughout the country. When the above-mentioned water distribution blocks A and B are seen from the viewpoint of water supply population per one day, it is found that they are positioned at a level of the larger number of plants and that they are plants having the typical scale in Japan's water supply business.

In this way, in the first embodiment of the invention, a normally distributed histogram obtained by converting the daily average water supply according to the nationwide water supply statistics by the normal distribution converting formula (1) is obtained in advance, and the daily average water supply in the water distribution block to be analyzed is analyzed with the average value and the dispersion value obtained from this histogram, thereby making it easy to recognize what scaled business unit the monitored block corresponds to in the water distribution scale from the view of the nationwide water supply statistics, without checking it with the nationwide water supply statistics in the conventional way.

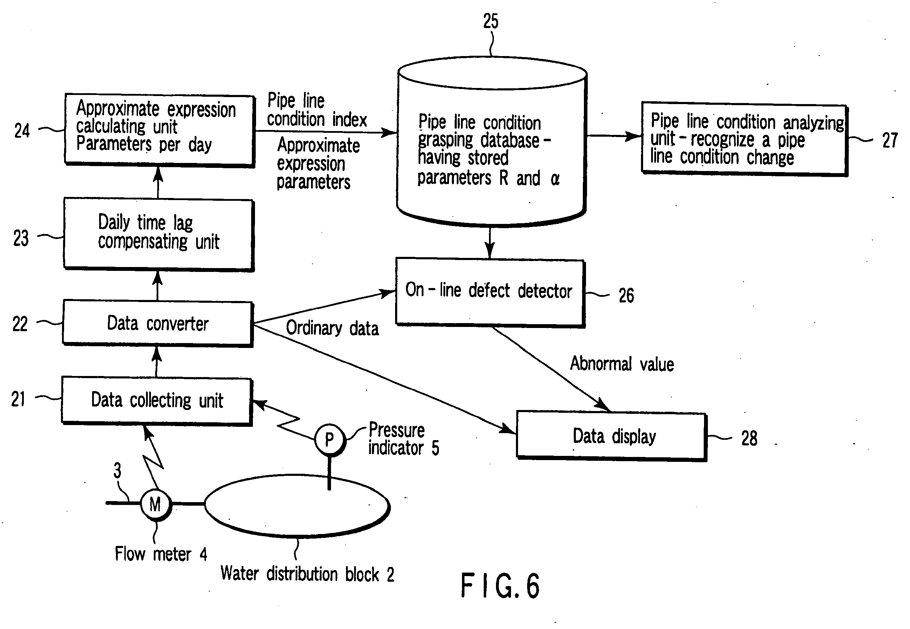

FIG. 6. is a block diagram showing an information analysis system for water distribution and pipelines according to a second embodiment of the invention.

In FIG. 6, the reference numeral 21 is a data collecting unit which takes in the flow rate data and the pressure data respectively measured by the one flow meter 4 mounted in the clean water injection pipe 3 near the entrance of the water distribution block 2 and the one pressure indicator 5 mounted in the appropriate pipe within the water distribution block 2, as shown in FIG. 1, at regular intervals, for example, at intervals of 0.85 second. The reference numeral 22 is a data converter which converts the flow rate data and the pressure data collected by the data collecting unit 21 into data of intervals necessary for calculation, for example, data of 5-second intervals.

The reference numeral 23 is a daily time lag compensating unit which takes in the flow rate data and the pressure data converted by the data converter 22, stores the data for one day into a memory provided in the unit 23 not illustrated, and selects a time lag showing the highest correlation between the flow rate data and the pressure data for one day stored in the memory to compensate the lag. Since the measurement between the data respectively transmitted from the flow meter 4 and the pressure indicator 5 has each time lag, the daily time lag compensating unit 23 is to compensate the time lags to obtain related data. Namely, since the output of the flow meter 4 and the output of the pressure indicator 5 are not obtained simultaneously, it is not possible to obtain correctly a calculation result of Hazen William's formula (described later). Therefore, in order to perform the correct calculation, the time lag appearing when the flow rate data and the pressure data have the highest correlation is compensated to be zero.

The reference numeral 24 is an approximate expression calculating unit which sequentially takes in the flow rate data and the pressure data for one day at intervals of 5 seconds compensated by the daily time lag compensating unit 23, and calculates an approximate pressure based on the modified Hazen William's formula specifically mentioned below, handling a virtual pipeline total length L and a flow rate correction coefficient $\alpha$ per day as parameters in the least-square method. The approximate pressure is obtained when a least-square difference between the calculated approximate pressure and the measured pressure become minimum. The reference numeral 25 is a pipeline condition grasping database which stores the parameters obtained by the approximate expression calculating unit 24.

The reference numeral 26 is an on-line defect detector which calculates the pressure value based on the Hazen William's approximate expression with the parameters stored in the pipeline condition grasping database 25 while receiving the flow rate data and the pressure data at intervals of 5 seconds from the data converter 22, and detects an abnormal value when a water head difference between the above pressure value and an actually measured pressure value is deviated more than a predetermined value (for example, 2.5 m or 3.3 m or more).

The reference numeral 27 is a pipeline condition analyzing unit which is provided with a learning function of recognizing the condition of a pipeline while monitoring the values of the virtual pipeline total length L and the flow rate correction coefficient $\alpha$ per day stored in the pipeline condition grasping database unit 25, labeling the portfolios of the parameters as a learning item, and classifying the pipe network into patterns.

For example, assuming that the total length L varies in five levels and that the flow rate correction coefficient $\alpha$ varies in five levels, the pipe network will have 25 categories or patterns. When the total length L is in the third level (L=3) and the flow rate correction coefficient $\alpha$ is in the second level ($\alpha$=2), the pipe network is labeled as "label 2", for example. Thus, it is possible to classify the characteristic of the pipe network by such a labeling process.

The reference numeral 28 is a data display which displays the abnormal value detected by the on-line defect detector 26 and the flow rate data and pressure data of 5-second intervals converted by the data converter 22.

Next, a function of the information analysis system for water distribution and pipelines structured as mentioned above will be described.

When the data collecting unit 21 receives the flow rate data and the pressure data respectively measured by the flow meter 4 and the pressure indicator 5, for example, at intervals of 0.85 second, the flow rate data and the pressure data are converted into the data, for example, of 5-second intervals by the data converter 22 and supplied to the daily time lag compensating unit 23.

The daily time lag compensating unit 23 stores the flow rate data and the pressure data for one day supplied from the data converter 22 into the memory not illustrated and selects a time lag showing the highest correlation between the flow rate data and the pressure data to compensate the lag.

When the approximate expression calculating unit 24 sequentially receives the flow rate data and the pressure data of 5-second intervals with the time lag for one day compensated, it performs the calculation based on the modified Hazen William's formula shown in the formula (2), to obtain the virtual pipeline total length L and the flow rate correction coefficient $\alpha$ for every day as the parameters by the least-square method.

$$H_{loss} = 10.67 \times L \times Q^{1.85} \times \alpha/(C^{1.85} \times D^{4.87}) \ldots (2)$$

where, $H_{loss}$: water head loss

L: virtual pipeline total length (m)

Q: indicated value of the flow meter

C: flow velocity coefficient (set at 110)

D: diameter of pipe (set at the inflow pipe diameter 500 [mm] shown in FIG. 4, in this case)

$\alpha$ : flow rate correction coefficient of a water distribution block.

The Hazen William's formula is primarily a formula for calculating the water head loss of one pipeline, but it is applied to the pipeline network. In this case, since the pipeline network is not formed of one pipeline, the water head loss becomes larger even in the same flow rate in some cases. Therefore, the coefficient $\alpha$ for increasing the apparent flow rate is introduced in the modified formula (2) .

More specifically, through approximation obtained by the modified Hazen William's formula, the flow rate and the pressure of the pipeline network can be approximated by one virtual pipeline and its characteristics can be compared with each other. In this case, since a pipeline having pressure reduction cannot show a loss without virtually increasing its flow rate, an approximate expression having $\alpha$ at its flow rate part is adopted and the approximation method is adapted to extract the parameter in which the least square difference between this expression and the actual measurement is the least. Namely, when apparent flow rate is increased, for example, the pipeline loss caused by the flow resistance will be increased, which can be recognized by the reduction of the pressure in the pipeline.

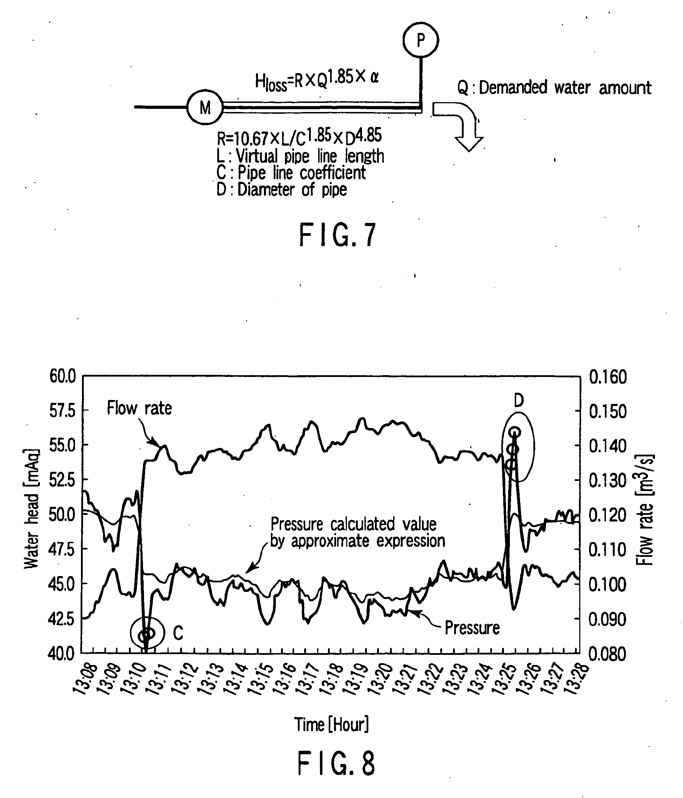

Here, when the pipeline network is expressed by one pipeline as shown in FIG. 7, the water head loss is

$$H_{loss} = R \times Q^{1.85} \times \alpha$$

where,

$$R = 10.67 \times L/C^{1.85} \times D^{4.85}$$

L: virtual pipeline length, C: flow velocity coefficient, D: pipeline diameter.

The daily virtual pipeline total length L obtained in this way is stored into the pipeline condition grasping database 25 with the R obtained from the above expression and the flow rate correction coefficient $\alpha$ as the parameters. The character R denotes a general pipeline resistance which is determined definitely irrespective of the flow rate in the pipeline. Since the pipeline coefficient C and the pipeline diameter D are predetermined, the pipeline resistance R may be determined in accordance with the value of the virtual pipeline total length L.

Next, an on-line detection function of abnormal condition in the water distribution block 2 will be described.

When the on-line defect detector 26 receives the flow rate data and the pressure data at intervals of 5 seconds from the data base converter 22, the parameters R and $\alpha$ and the actually measured flow rate data stored in the pipeline condition grasping database 25 of, for example, the previous day are given to the Hazen William's approximate expression in order to calculate the pressure value, and this pressure value and the actually measured pressure value are supplied to the data display 27.

FIG. 8 is a graph showing the correlation between the inflow rate and the water head in one time zone (13:00 to 13:30) of a trend graph of the daily flow rate and the daily water head in the water distribution block 2 displayed by the data display 27 in an enlarged way.

In FIG. 8, the flow rate changes momently, the pressure obtained by calculating the correlation between the flow rate and the water head through the approximate expression shown in the formula (2) is shown in a waveform as shown by a thin line and the actually measured pressure is shown in the waveform as shown by a thick line.

When the upper/lower limits of ±2.5 [m] are set in the approximate expression, an abnormal change of the flow rate can be detected by taking the parts C and D in FIG. 8 exceeding the upper/lower limits as the abnormal change of the water head.

Next, a condition change detection function of the water distribution block 2 will be described.

The pipeline condition analyzing unit 27 monitors the values of the virtual pipeline total length L and the flow rate correction coefficient $\alpha$ for every day stored in the pipeline condition grasping database 25, in order to recognize the pipeline condition and it has a learning function of labeling the portfolios of the parameters as a learning item and classifying the pipe network into patterns.

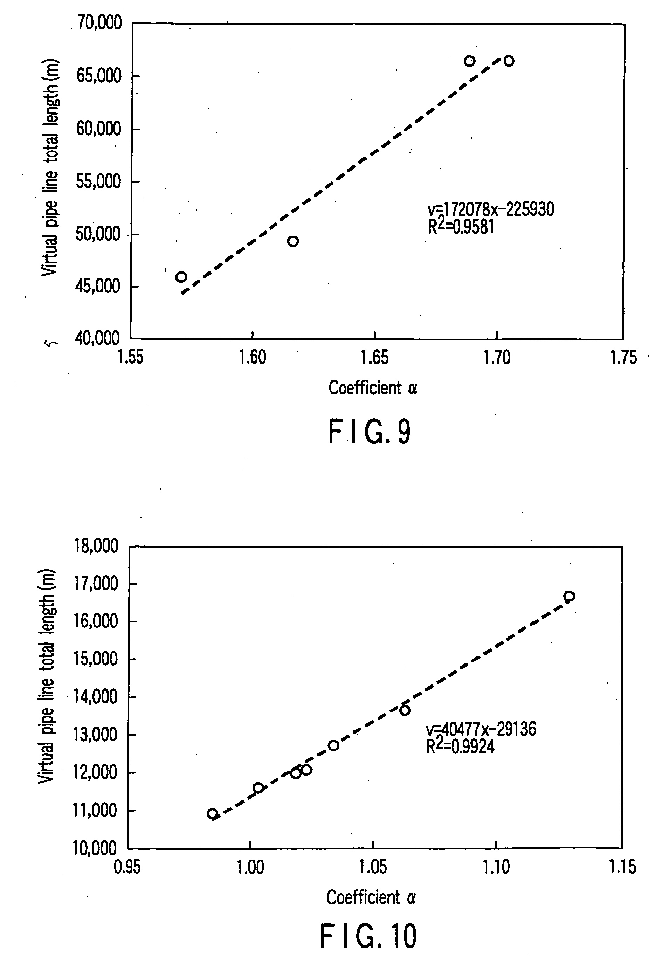

FIG. 9 shows an example of the correlation graph between the flow rate correction coefficient $\alpha$ and the virtual pipeline total length L obtained from the measurement data of pressure and flow rate during a period of time when the pressure reducing valve set for keeping water pressure operates normally.

As shown in FIG. 9, the flow rate correction coefficient $\alpha$ is distributed in the range of 1.57 to 1.71 and the virtual pipeline total length L is distributed in the range of 45,000 [m] to 66,000 [m]. Therefore, when the pressure reducing valve operates normally, the pipeline resistance in the water distribution block 2 may increase, and the virtual pipeline total length L in the approximate expression shown in the formula (2) increases, and as a result, the flow rate correction coefficient $\alpha$ also increases. In other words, when the correlation between the length L and the coefficient $\alpha$ varies as shown by the graph of FIG. 9, it is possible to recognize that the pressure reduction valve is operating normally in the pipeline network.

FIG. 10 shows an example of the correlation graph between the flow rate correction coefficient $\alpha$ and the virtual pipeline total length L obtained from the measurement data of the pressure and the flow rate during a period of time after a defect of the pressure reducing valve is solved.

As shown in FIG. 10, the flow rate correction coefficient $\alpha$ changes in the range of 0.97 to 1.13 and the virtual pipeline total length L changes in the range of 11,000 [m] to 16,800 [m]. It comes from the fact that the defect of the pressure reducing valve is solved and secondary side pressure of the pressure reducing valve becomes normal, and as the result, it is found that the virtual pipeline total length becomes short and that the value of the flow rate correction coefficient $\alpha$ changes in the vicinity of one. For example, if a prescribed pressure loss appears in the pipeline even after the pressure reducing valve is make ineffective, it can be determined that the pressure reducing valve is in a defect condition.

In this way, it is possible to recognize a change in the condition of the water distribution block caused by a defect of the pressure reducing valve, by monitoring the parameters of the virtual pipeline total length L and the flow rate correction coefficient $\alpha$ for every day stored in the pipeline condition database 25 by the pipeline condition analyzing unit 27 and assuming a change trend of these values.

**Claims**

1. An information analysis system for water distribution and pipelines **characterized by** comprising:

   data collecting means (21) for taking in, at predetermined intervals, flow rate data and pressure data respectively transmitted from one flow meter which measures flow rate of clean water flowing from a water distribution pond to a water distribution pipeline network and one pressure indicator which measures pressure of one pipeline at a proper position within the water distribution pipeline network;

   approximate expression calculating means (24) for taking in the flow rate data and the pressure data for one day collected by the data collecting means sequentially, to calculate the data based on Hazen William's approximate expression shown below, and for obtaining a virtual pipeline total length and a flow rate correction coefficient per day as parameters by a least-square method so to store thus obtained value data into a pipeline condition grasping database,

$$H_{loss} = 10.67 \times L \times Q^{1.85} \times \alpha / (C^{1.85} \times D^{4.87})$$

where,

$H_{loss}$: water head loss
L: virtual pipeline total length (m)
Q: indicated value of the flow meter
C: flow velocity coefficient
D: diameter of pipe (mm)
$\alpha$: flow rate correction coefficient of a water distribution block; and

on-line defect detecting means (26) for taking in the flow rate data and the pressure data collected by the data collecting means at the predetermined intervals, calculating a pressure value based on the Hazen William's approximate expression with the parameters stored in the pipeline condition grasping database, and detecting an abnormal value when a water head difference between the calculated pressure value and actually measured pressure value is deviated from each other for a predetermined value and more.

2. An information analysis system for water distribution and pipelines **characterized by** comprising:

data collecting means (21) for taking in, at predetermined intervals, flow rate data and pressure data respectively transmitted from one flow meter which measures flow rate of clean water flowing from a water distribution pond to a water distribution pipeline network and one pressure indicator which measures pressure of one pipeline at a proper position within the water distribution pipeline network;
approximate expression calculating means (24) for taking in the flow rate data and the pressure data for one day collected by the data collecting means sequentially, to calculate the data based on Hazen William's approximate expression shown below, and for obtaining a virtual pipeline total length and a flow rate correction coefficient per day as parameters by a least-square method so as to store thus calculated value data into a pipeline condition grasping database,

$$H_{loss} = 10.67 \times L \times Q^{1.85} \times \alpha / (C^{1.85} \times D^{4.87})$$

where, $H_{loss}$: water head loss
L: virtual pipeline total length (m)
Q: indicated value of the flow meter
C: flow velocity coefficient
D: diameter of pipe (mm)
$\alpha$: flow rate correction coefficient of a water distribution block; and

pipeline condition analyzing means (27) for recognizing a pipeline condition while monitoring the values of the parameters per day stored in the pipeline condition grasping database, the analyzing means having a learning function of labeling portfolios of the parameters as a learning item and classifying the pipeline network into patterns.

3. The information analysis system for water distribution and pipelines according to claim 1 or claim 2, **characterized by** further comprising:

daily time lag compensating means (23), having a memory for taking in the flow rate data and the pressure data collected by the data collecting means and storing the data for one day, for selecting a time lag presenting a highest correlation between the flow rate data and the pressure data for one day stored in the memory, to compensate the time lag and for supplying the compensated flow rate data and pressure data for the one day to the approximate expression calculating means sequentially.

**Patentansprüche**

1. Informationsanalyse für Wasserverteilung und Rohrleitungen, **dadurch gekennzeichnet, dass** es umfasst:

Datensammelmittel (21) zum Aufnehmen, bei vorgegebenen Intervallen, von Durchflussratendaten und Druckdaten, die jeweils aus einem Durchflussmeter, das die Durchflussrate von reinem Wasser misst, das aus einem Wasserverteilungsbecken zu einem Wasserverteilungs-Rohrleitungsnetzwerk fließt, bzw. einem Druckindikator, der den Druck einer Rohrleitung an einer geeigneten Position innerhalb des Wasserverteilungs-Rohrleitungsnetzwerks misst, übertragen werden;

Näherungsausdruck-Berechnungsmittel (24) zum Aufnehmen der Durchflussratendaten und der Druckdaten über einen Tag, die durch das Datensammelmittel sequenziell gesammelt werden, um die Daten basierend auf dem unten gezeigten Hazen-William's-Ausdruck zu berechnen, und zum Ermitteln einer virtuellen Rohrleitungs-Gesamtlänge und eines Durchflussraten-Korrekturkoeffizienten pro Tag als Parameter durch ein Verfahren kleinster Quadrate, um so die derart ermittelten Wertdaten in einer Rohrleitungsbedingungs-Erfassungsdatenbank zu speichern,

$$H_{loss} = 10,67 \text{ x } L \text{ x } Q^{1,85} \text{ x } ^{\alpha}/(C^{1,85} \text{ x } D^{4,87})$$

wobei

$H_{loss}$: Wassersäulenverlust
L: Virtuelle Rohrleitungsgesamtlänge (m)
Q: Angezeigter Wert des Durchflussmessers
C: Durchflussgeschwindigkeitskoeffizient
D: Rohrdurchmesser (mm)
$\alpha$: Durchflussraten-Korrekturkoeffizient eines Wasserverteilungsblocks; und

Online-Defektdetektionsmittel (26) zum Aufnehmen der Durchflussratendaten und der Druckdaten, die durch das Datensammelmittel gesammelt sind, bei den vorgegebenen Intervallen, Berechnen eines Druckwerts, basierend auf dem Hazen William's-Näherungsausdruck mit dem in der Rohrleitungsbedingungs-Erfassungsdatenbank gespeicherten Parametern, und Detektieren eines abnormalen Werts, wenn eine Wassersäulendifferenz zwischen dem berechneten Druckwert und tatsächlich gemessenem Druckwert voneinander um einen vorgegebenen Wert oder mehr abweicht.

2. Informationsanalyse für Wasserverteilung und Rohrleitungen, **dadurch gekennzeichnet, dass** es umfasst:

Datensammelmittel (21) zum Aufnehmen, bei vorgegebenen Intervallen, von Durchflussratendaten und Druckdaten, die jeweils aus einem Durchflussmeter, das die Durchflussrate von reinem Wasser misst, das aus einem Wasserverteilungsbecken zu einem Wasserverteilungs-Rohrleitungsnetzwerk fließt, bzw. einem Druckindikator, der den Druck einer Rohrleitung an einer geeigneten Position innerhalb des Wasserverteilungs-Rohrleitungsnetzwerks misst, übertragen werden;

Näherungsausdruck-Berechnungsmittel (24) zum Aufnehmen der Durchflussratendaten und der Druckdaten über einen Tag, die durch das Datensammelmittel sequenziell gesammelt werden, um die Daten basierend auf dem unten gezeigten Hazen-William's-Ausdruck zu berechnen, und zum Ermitteln einer virtuellen Rohrleitungs-Gesamtlänge und

eines Durchflussraten-Korrekturkoeffizienten pro Tag als Parameter durch ein Verfahren kleinster Quadrate, um so die derart ermittelten Wertdaten in einer Rohrleitungsbedingungs-Erfassungsdatenbank zu speichern,

$$H_{loss} = 10,67 \text{ x } L \text{ x } Q^{1,85} \text{ x } ^{\alpha}/(C^{1,85} \text{ x } D^{4,87})$$

wobei

$H_{loss}$ : Wassersäulenverlust
L: Virtuelle Rohrleitungsgesamtlänge (m)
Q: Angezeigter Wert des Durchflussmessers
C: Durchflussgeschwindigkeitskoeffizient
D: Rohrdurchmesser (mm)
$\alpha$: Durchflussraten-Korrekturkoeffizient eines Wasserverteilungsblocks; und

Rohrleitungsbedingungs-Analysemittel (27) zum Erkennen einer Rohrleitungsbedingung bei der Überwachung der Werte der Parameter pro Tag, die in der Rohrleitungsbedingungs-Erfassungsdatenbank gespeichert sind, wobei das Analysemittel eine Lernfunktion zum Bezeichnen von Portfolios der Parameter als einem Lernobjekt und Klassifizieren des Rohrleitungsnetzwerks in Muster aufweist.

**3.** Informationsanalysesystem für Wasserverteilung und Rohrleitungen gemäß Anspruch 1 oder 2, **dadurch gekennzeichnet, dass** es weiter umfasst:

Tages-Zeitverzug-Kompensationsmittel (23), aufweisend einen Speicher zum Aufnehmen der Durchflussratendaten und der Druckdaten, die durch das Datensammelmittel gesammelt sind, und Speichern der Daten für einen Tag, zum Auswählen einer Zeitverzögerung, die eine höchste Korrelation zwischen den Durchflussratendaten und den Druckdaten für einen Tag präsentieren, die im Speicher gespeichert sind, um die Zeitverzögerung zu kompensieren, und zum sequentiellen Zuführen der kompensierten Durchflussratendaten und Druckdaten für einen Tag an das Näherungsausdrucks-Berechnungsmittel.

## Revendications

**1.** Système d'analyse d'information pour la distribution et des conduites d'eau **caractérisé en ce qu'**il comporte :

des moyens de collecte de données (21) destinés à capter, à des intervalles prédéterminés, des données de débit et des données de pression transmises de manière respective par un débitmètre qui mesure un débit d'eau propre s'écoulant depuis un réservoir de distribution d'eau jusqu'à un réseau de conduite de distribution d'eau et un manomètre qui mesure une pression d'une conduite dans une position appropriée dans le réseau de conduite de distribution d'eau ;
des moyens de calcul d'expression approchée (24) destinés à capter les données de débit et les données de pression pour un jour collectées par les moyens de collecte de données de manière séquentielle, afin de calculer les données sur la base de l'expression approchée de Hazen William présentée ci-dessous, et d'obtenir une longueur totale de conduite virtuelle et un coefficient de correction de débit par jour comme paramètres par une méthode des moindres carrés de façon à stocker des données de valeur ainsi obtenues dans une base de données de saisie d'état de conduite,

$$\text{Hloss} = 10{,}67 \times L \times Q^{1,85} \times \alpha / (C^{1,85} \times D^{4,87})$$

où,

Hloss : perte de charge d'eau
L : longueur totale de conduite virtuelle (m)
Q : valeur indiquée du débitmètre
C : coefficient de vitesse d'écoulement
D : diamètre du tuyau (mm)
$\alpha$ : coefficient de correction de débit d'un bloc de distribution d'eau ; et

des moyens de détection de défaut en ligne (26) destinés à capter les données de débit et les données de pression collectées par les moyens de collecte de données aux intervalles prédéterminés, à calculer une valeur de pression sur la base de l'expression approchée de Hazen William avec les paramètres stockés dans la base de données de saisie d'état de conduite, et à détecter une valeur anormale quand une différence de charge d'eau entre la valeur de pression calculée et la valeur de pression réellement mesurée s'écarte d'une valeur prédéterminée et davantage.

**2.** Système d'analyse d'information pour la distribution et des conduites d'eau **caractérisé en ce qu'**il comporte :

des moyens de collecte de données (21) destinés à capter, à des intervalles prédéterminés, des données de débit et des données de pression transmises de manière respective par un débitmètre qui mesure un débit d'eau propre s'écoulant depuis un réservoir de distribution d'eau jusqu'à un réseau de conduite de distribution d'eau et un manomètre qui mesure une pression d'une conduite dans une position appropriée dans le réseau de conduite de distribution d'eau ;

des moyens de calcul d'expression approchée (24) destinés à capter les données de débit et les données de pression pour un jour collectées par les moyens de collecte de données de manière séquentielle, afin de calculer les données sur la base de l'expression approchée de Hazen William présentée ci-dessous, et d'obtenir une longueur totale de conduite virtuelle et un coefficient de correction de débit par jour comme paramètres par une méthode des moindres carrés de façon à stocker des données de valeur ainsi calculées dans une base de données de saisie d'état de conduite,

$$\text{Hloss} = 10,67 \times L \times Q^{1,85} \times \alpha/(C^{1,85} \times D^{4,87})$$

où,

Hloss : perte de charge d'eau
L : longueur totale de conduite virtuelle (m)
Q : valeur indiquée du débitmètre
C : coefficient de vitesse d'écoulement
D : diamètre du tuyau (mm)
$\alpha$ : coefficient de correction de débit d'un bloc de distribution d'eau ; et

des moyens d'analyse d'état de conduite (27) destinés à identifier un état de conduite tout en surveillant les valeurs des paramètres par jour stockées dans la base de données d'état de conduite, les moyens d'analyse ayant une fonction d'apprentissage destinée à marquer des dossiers des paramètres comme élément d'apprentissage et à classer le réseau de conduite en modèles.

3. Système d'analyse d'information pour la distribution et des conduites d'eau selon la revendication 1 ou la revendication 2, **caractérisé en ce qu'**il comporte en outre :

des moyens de compensation de retard quotidien (23), ayant une mémoire destinée à capter les données de débit et les données de pression collectées par les moyens de collecte de données et à stocker les données pour un jour, afin de sélectionner un retard présentant une corrélation la plus élevée entre les données de débit et les données de pression pour un jour stockées dans la mémoire, de façon à compenser le retard et afin de délivrer les données de débit et les données de pression compensées pour un jour aux moyens de calcul d'expression approchée d'une manière séquentielle.

FIG. 1

FIG. 2

FIG. 3A

FIG. 3B

|  | Water distribution block A | Water distribution block B |
|---|---|---|
| Water supply population (person) | 27,221 | 18,210 |
| Daily water supply (m³/d) | 9,947 | 5,820 |
| Per person per day (liter) | 365 | 320 |
| Pipe line length (km) | 99.43 | 58.50 |
| Diameter of injection pipe (mm) | 500 | 300 |
| Pressure reducing valve | Exist | Not exist |
| Block altitude difference (m) | 11.8 | 44.6 |
| Water distribution pond LWL (m) | 68.6 | 81.0 |
| Pressure indicator altitude (m) | 5.2 | 19.9 |

FIG. 4

Comparing with nationwide water supply business units

Water supply population (×1000)

Water distribution block
A – positioned at 60%

Water distribution block
B – positioned at 40%

Daily water supply (m³/d)

FIG.5

EP 1 801 682 B1

| 24 | Approximate expression calculating unit Parameters per day |
|---|---|

Pipe line condition index

Approximate expression parameters

| 25 | Pipe line condition grasping database - having stored parameters R and α |
|---|---|

| 27 | Pipe line condition analyzing unit - recognize a pipe line condition change |
|---|---|

| 23 | Daily time lag compensating unit |
|---|---|

| 22 | Data converter |
|---|---|

Ordinary data

| 26 | On-line defect detector |
|---|---|

Abnormal value

| 21 | Data collecting unit |
|---|---|

Pressure indicator 5

| 28 | Data display |
|---|---|

3

M

Flow meter 4

Water distribution block 2

F I G. 6

$$H_{loss} = R \times Q^{1.85} \times \alpha$$

Q : Demanded water amount

$$R = 10.67 \times L / C^{1.85} \times D^{4.85}$$

L : Virtual pipe line length
C : Pipe line coefficient
D : Diameter of pipe

FIG. 7

Flow rate

D

Pressure calculated value
by approximate expression

Pressure

C

Time [Hour]

FIG. 8

v=172078x-225930
R²=0.9581

FIG. 9

v=40477x-29136
R²=0.9924

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Modelling errors, entropy and the hydraulic reliability of water distribution systems. **SETIADI et al.** ADVANCES IN ENGINEERING SOFTWARE. ELSEVIER SCIENCE, November 2005, vol. 36, 780-788